# EUROPÄISCHE PATENTSCHRIFT

(11) **EP 3 894 309 B1**
(45) Veröffentlichungstag und Bekanntmachung des Hinweises auf die Patenterteilung: **15.05.2024**
(21) Anmeldenummer: 19798587.2
(22) Anmeldetag: 04.11.2019
(51) Int. Cl.: B62J 1/06, B60N 2/02, B60N 2/90, B62J 1/10

(54) **VERSTELLBARE SITZBAUGRUPPE FÜR EIN KRAFTRAD SOWIE KRAFTRAD**
ADJUSTABLE SEAT ASSEMBLY FOR A MOTORCYCLE, AND MOTORCYCLE
ENSEMBLE SIÈGE RÉGLABLE DE MOTOCYCLE ET MOTOCYCLE

(30) Priorität: 10.12.2018 DE 102018131582
(43) Veröffentlichungstag der Anmeldung: 20.10.2021
(73) Patentinhaber: Bayerische Motoren Werke Aktiengesellschaft, 80809 München (DE)
(72) Erfinder: SEILER, Joerg, 80939 München (DE); NIKOLIC, Miroslav, 80992 München (DE); DIEHL, Helmut, 82431 Kochel (DE); ROESNER, Mathias, 80335 München (DE); BEUTING, Guido, 80689 Muenchen (DE); SCHELL, Raimund, 85764 Oberschleissheim (DE)
(86) Internationale Anmeldenummer: PCT/EP2019/080016
(87) Internationale Veröffentlichungsnummer: WO 2020/120022

(56) Entgegenhaltungen:
- EP-A2- 1 437 293
- CN-A- 107 380 306
- DE-A1- 10 030 590
- US-A- 4 462 634
- US-A1- 2007 176 403
- US-A1- 2018 141 604

## Beschreibung

Die Erfindung betrifft eine verstellbare Sitzbaugruppe für ein Kraftrad sowie ein Kraftrad.

Motorräder mit einer höhenverstellbaren Sitzbank sind in verschiedenen Varianten bekannt. Zur Höhenverstellung der Sitzbank ist typischerweise unterhalb der Sitzbank eine Verstellvorrichtung vorgesehen, die mechanisch oder elektrisch betätigt wird und die dazu ausgebildet ist, die Höhe der Sitzbank zu verstellen.

Die Sitzbank grenzt bei Motorrädern üblicherweise an den Tank des Motorrads. Bei einer Höhenverstellung der Sitzbank verändert sich daher eine Fuge, die sich zwischen dem Tank und der Sitzbank befindet. Zusätzlich ändert sich bei der Höhenverstellung auch eine Fuge zwischen der Sitzbank und der Karosserie des Motorrads, beispielsweise zwischen der Sitzbank und einer Seitenverkleidung. Werden diese Fugen zu groß, kann Regenwasser in eine der Fugen eindringen und zu unter der Sitzbank befindlichen Bauteilen des Motorrads gelangen. Außerdem können zu große Fugen beim Kunden den Eindruck einer niedrigen Wertigkeit hervorrufen.

Die US 4 462 634 A offenbart eine Sitzbaugruppe gemäß dem Oberbegriff des Anspruchs 1.

Die DE 100 30 590 A1 offenbart ein Sitzteil für ein Kraftfahrzeug, wobei das Sitzteil eine höhenverstellbare Polsterung aufweist.

Die US 2018 0 141 604 A1 und die CN 107 380 306 A offenbaren jeweils eine Verstelleinrichtung für eine Sitzbaugruppe eines Motorrads, mittels der eine Höhe der Sitzposition eingestellt werden kann.

Die EP 1 437 293 A2 offenbart eine Sitzbaugruppe für ein Motorrad, bei der unterhalb der Sitzbaugruppe ein Verstauraum gebildet ist.

Die US 2007 176 403 A1 offenbart eine Sitzbaugruppe für ein Motorrad, bei der die Sitzhöhe mittels zweier nebeneinander angeordneter Luftkissen verändert werden kann.

Aufgabe der Erfindung ist es daher, ein Kraftrad mit einer verstellbaren Sitzbaugruppe bereitstellen, bei dem die Nachteile aus dem Stand der Technik behoben sind.

Die Aufgabe wird erfindungsgemäß gelöst durch eine verstellbare Sitzbaugruppe für ein Kraftrad gemäß Anspruch 1.

Eine Sitzfläche für einen Fahrer und gegebenenfalls für einen Beifahrer ist dabei auf einem Sitzpolster vorgesehen, das an der Verstellschale der Sitzwanne angebracht ist. Mittels der Verstelleinrichtung ist daher also der Teil der Sitzwanne verstellbar, welcher der tatsächlichen Sitzfläche zugeordnet ist.

Der Basisabschnitt der Sitzwanne, welchem dementsprechend keine Sitzfläche zugeordnet ist, wird hingegen fest und unverstellbar mit einem Bauteil des Kraftrads verbunden, insbesondere mit einem Rahmenteil des Kraftrads.

Unter der Sitzwanne sind dabei sämtliche Rahmenteile der Sitzbaugruppe zu verstehen, nicht also beispielsweise Sitzpolster der Sitzbaugruppe, die an der Sitzwanne angebracht sind.

Kerngedanke der Erfindung ist es, zusätzlich zur Basisschale der Sitzwanne eine weitere Schale, nämlich die Verstellschale bereitzustellen. Die Basisschale und die Verstellschale bilden miteinander sozusagen eine Sitzwanne mit doppeltem Boden, wobei die beiden Schalen voneinander verschiedene Aufgaben erfüllen. Die Basisschale wird fest und unverstellbar mit dem Kraftrad verbunden, wodurch eine bei einer Höhen- und/oder Neigungsverstellung der Verstellschale (und damit bei einer Verstellung der Sitzfläche) gleichbleibende Fuge zwischen der Basisschale und dem Kraftrad gewährleistet ist. Es ergibt sich also auch bei der Höhen- und/oder Neigungsverstellung der Verstellschale ein unverändertes Fugenbild zwischen der Sitzbaugruppe und der Karosserie des Kraftrads. Die Größe der Fuge kann dabei so gewählt werden, dass ein Eindringen von Regenwasser unter die verstellbare Sitzbaugruppe verhindert ist. Durch die erfindungsgemäße Sitzbaugruppe ist daher ein zuverlässiger Wetterschutz von unter der Sitzbaugruppe liegenden Bauteilen des Kraftrads bei gleichzeitiger Höhen- und/oder Neigungsverstellbarkeit der Sitzfläche erreicht.

Die Verstelleinrichtung umfasst wenigstens ein Verstellelement, das zwischen der Basisschale und der Verstellschale angeordnet und dazu ausgebildet ist, die Höhe und/oder die Neigung der Verstellschale gegenüber der Basisschale zu verstellen. Das Verstellelement legt einen Abstand zwischen einem Kontaktpunkt des Verstellelements zur Basisschale und einem Kontaktpunkt des Verstellelements zur Verstellschale fest, wodurch auch die Höhe und/oder die Neigung der Verstellschale gegenüber der Basisschale festgelegt ist.

Es ist wenigstens ein weiteres Verstellelement vorgesehen. Die beiden Verstellelemente weisen dabei jeweils wenigstens einen Kontaktpunkt zur Basisschale und wenigstens einen Kontaktpunkt zur Verstellschale auf und legen, wie oben beschrieben, jeweils einen Abstand zwischen diesen beiden Kontaktpunkten fest. Dadurch, dass die Verstellelemente in Längsrichtung der Sitzbaugruppe zueinander versetzt sind, kann durch Betätigen der beiden Verstellelemente in einfacher Art und Weise sowohl die Höhe als auch die Neigung der Verstellschale gegenüber der Basisschale verändert werden.

Unter der Längsrichtung der Sitzbaugruppe ist dabei diejenige Richtung zu verstehen, die nach der Montage der Sitzbaugruppe am Kraftrad der Längsrichtung des Kraftrads entspricht.

Die beiden Verstellelemente sind unabhängig voneinander betätigbar. Dementsprechend sind sowohl die Höhe als auch die Neigung der Verstellschale gegenüber der Basisschale individuell einstellbar. Insbesondere wird lediglich die Höhe der Verstellschale verändert, wenn beide Verstellelemente gleichzeitig in die gleiche Richtung betätigt werden. Wird hingegen lediglich eines der beiden Verstellelemente betätigt oder werden beide Verstellelemente gleichzeitig in unterschiedliche Richtungen betätigt, so wird die Neigung der Verstellschale verändert.

Vorzugsweise ist das wenigstens eine Verstellelement als Kniehebel, der zwischen der Basisschale und der Verstellschale angeordnet und mit diesen kraftübertragend verbunden ist, oder als Nocken ausgebildet, insbesondere wobei das wenigstens eine Verstellelement auf einer Welle angeordnet ist, die mit der Basisschale verbunden ist. Der Kniehebel bzw. der Nocken weist, wie oben allgemein für das Verstellelement beschrieben, jeweils wenigstens einen Kontaktpunkt zur Basisschale und zur Verstellschale auf und legt einen Abstand zwischen diesen beiden Kontaktpunkten fest, wodurch auch die Höhe und/oder die Neigung der Verstellschale gegenüber der Basisschale festgelegt werden kann.

Vorzugsweise ist der Kniehebel bzw. der Nocken auf der Welle angeordnet, die mit der Basisschale drehbar verbunden ist. Durch Drehen der Welle wird das Verstellelement betätigt und dementsprechend die Höhe und/oder die Neigung der Verstellschale gegenüber der Basisschale geändert.

Zum Beispiel umfasst die Verstelleinrichtung eine Feststelleinrichtung, die dazu ausgebildet ist, die Höhen- und/oder Neigungsverstellung der Verstellschale freizugeben und/oder zu sperren. Insbesondere ist die Welle mittels der Feststelleinrichtung gegen Verdrehen sicherbar. Durch die Feststelleinrichtung ist zuverlässig verhindert, dass die Höhe und/oder die Neigung der Verstellschale gegenüber der Basisschale ungewollt verändert wird.

Alternativ kann das wenigstens eine Verstellelement als pneumatisch und/oder hydraulisch betätigbares Fluidkissen ausgebildet sein. Vorzugsweise ist das Fluidkissen an der Basisschale angebracht und weist wenigstens einen Kontaktpunkt zur Verstellschale auf. Das Fluidkissen erstreckt sich von der Basisschale ausgehend über eine bestimmte Höhe, je nachdem, wie viel Luft und/oder Flüssigkeit sich im Fluidkissen befindet. Die Höhe und/oder die Neigung der Verstellschale gegenüber der Basisschale kann dementsprechend dadurch verstellt werden, dass Luft und/oder Flüssigkeit in das Fluidkissen gepumpt oder aus dem Fluidkissen abgelassen wird. Dabei ist die Höhe und/oder die Neigung der Verstellschale gegenüber der Basisschale umso größer, je mehr Luft und/oder Flüssigkeit sich im Fluidkissen befindet. Insbesondere ist auf diese Weise die Höhe und/oder die Neigung der Verstellschale stufenlos verstellbar.

Gemäß einer Ausgestaltung der Erfindung umfasst die Verstelleinrichtung eine Pumpe, die mit dem Fluidkissen fluidleitend verbunden und dazu ausgebildet ist, ein Fluid in das Fluidkissen zu pumpen und/oder das Fluid aus dem Fluidkissen abzupumpen. Zur Verstellung der Verstellschale wird dementsprechend die Pumpe manuell oder automatisch, beispielsweise mittels einer Elektromotors, betätigt. Bei dem Fluid kann es sich um Luft oder um eine Flüssigkeit handeln.

Handelt es sich bei dem Fluid um Luft, so ist auch ein Einwegbetrieb der Pumpe denkbar, sodass die Pumpe lediglich dazu ausgebildet ist, Luft in das Fluidkissen zu pumpen. Um die Luft wieder abzulassen, kann am Fluidkissen ein Ablassventil vorgesehen sein.

Insbesondere handelt es sich bei den beiden Verstellelementen jeweils um einen Kniehebel, um einen Nocken oder um ein Fluidkissen, wie sie oben beschrieben sind.

Insbesondere ist die Verstelleinrichtung mechanisch und/oder elektrisch betätigbar. Dementsprechend umfasst die Verstelleinrichtung einen Elektromotor und/oder einen mechanischen Mechanismus, mittels dem das wenigstens eine Verstellelement betätigbar ist. Die Betätigung des wenigstens einen Verstellelements kann zumindest teilweise automatisch und/oder manuell erfolgen.

Vorzugsweise ist das wenigstens eine Verstellelement dabei betätigbar, ohne dass Teile wie zum Beispiel Sitzpolster von der Sitzbaugruppe abgenommen werden müssen. Zu diesem Zweck kann die Verstelleinrichtung ein von außerhalb des Kraftrads zugängliches Betätigungselement aufweisen, wie zum Beispiel ein Stellrad zur Betätigung des mechanischen Mechanismus und/oder einen Betätigungsschalter für den Elektromotor.

Gemäß einer weiteren Ausgestaltung der Erfindung weist die Basisschale wenigstens ein Führungselement auf, auf das die Verstellschale aufgesetzt ist, insbesondere wobei das Führungselement in eine Öffnung in der Verstellschale eingreift. Insbesondere ist die Öffnung in der Verstellschale als Durchgangsöffnung ausgebildet, wobei das Führungselement die Durchgangsöffnung durchragt. Vorzugsweise liegt dabei das Führungselement an seinen, in Längsrichtung der Sitzbaugruppe gesehen seitlichen Abschnitten an einer Innenwand der Durchgangsöffnung an. Durch das wenigstens eine Führungselement ist also verhindert, dass sich die Verstellschale in Längsrichtung der Sitzbaugruppe gesehen seitlich gegenüber der Basisschale bewegt, wobei gleichzeitig die Höhen- und/oder Neigungsverstellbarkeit erhalten bleibt.

Vorzugsweise verläuft das Führungselement überwiegend vertikal, insbesondere wobei das Führungselement in Längsrichtung der Sitzbaugruppe geneigt ist und mit der Vertikalen einen Winkel von höchstens 45° einschließt, vorzugsweise höchstens 30°, weiter bevorzugt höchstens 20°.

Die Aufgabe wird ferner erfindungsgemäß gelöst durch ein Kraftrad mit einer oben beschriebenen Sitzbaugruppe, wobei die Basisschale fest und unverstellbar am Kraftrad angebracht ist. Bezüglich der Vorteile wird auf die obigen Erläuterungen verwiesen.

Das Kraftrad kann ein Steuergerät umfassen, das dazu ausgebildet ist, die Verstelleinrichtung automatisch basierend auf Betriebsparametern des Kraftrads zu betätigen, insbesondere basierend auf einer Geschwindigkeit des Kraftrads. Beispielsweise betätigt das Steuergerät die Verstelleinrichtung derart, dass die Verstellschale bei niedrigen Geschwindigkeiten, insbesondere beim Anfahren, eine geringere Neigung und/oder eine geringere Höhe aufweist als bei höheren Geschwindigkeiten.

Vorzugsweise wird bei niedrigen Geschwindigkeiten, insbesondere beim Anhalten des Kraftrads, die Höhe der Sitzfläche reduziert, sodass der Fahrer den Erdboden leichter mit seinen Beinen erreichen kann.

Weiter bevorzugt wird mit steigender Geschwindigkeit und/oder bei starker Beschleunigung, also wenn die Beschleunigung einen vordefinierten Grenzwert übersteigt, die Neigung der Sitzfläche erhöht, sodass der Fahrer weniger Kraft benötigt, um sich gegen den steigenden Windwiderstand am Kraftrad festzuhalten.

Weitere Vorteile und Eigenschaften der Erfindung ergeben sich aus der nachfolgenden Beschreibung und den beigefügten Zeichnungen, auf die Bezug genommen wird. In diesen zeigen:
- Figur 1 in einer Seitenansicht ein erfindungsgemäßes Kraftrad mir einer erfindungsgemäßen Sitzbaugruppe;
- Figur 2 in einer schematischen Seitenansicht die erfindungsgemäße Sitzbaugruppe des Kraftrads von Figur 1;
- Figur 3 in einer Seitenansicht die erfindungsgemäße Sitzbaugruppe von Figur 2 mit abgenommenem Sitzpolster;
- die Figuren 4a und 4b in einer Draufsicht bzw. in einer Ansicht von unten die erfindungsgemäße Sitzbaugruppe von Figur 2 gemäß einer ersten Ausführungsform;
- die Figuren 5a und 5b schematisch in einen Querschnitt die erfindungsgemäße Sitzbaugruppe von Figur 2 gemäß der ersten Ausführungsform bzw. gemäß einer zweiten Ausführungsform;
- Figur 6 in einer Schrägansicht die erfindungsgemäße Sitzbaugruppe von Figur 2 gemäß einer dritten Ausführungsform; und
- die Figuren 7a und 7b jeweils in einer Ansicht von unten die erfindungsgemäße Sitzbaugruppe von Figur 6.

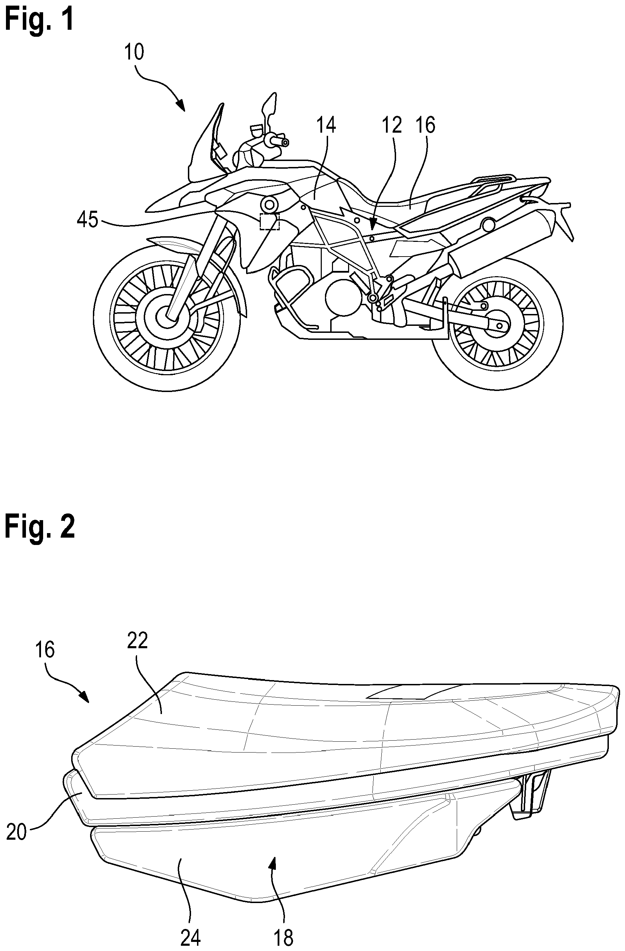

In Figur 1 ist ein Kraftrad 10 gezeigt, das als Motorrad ausgebildet ist. Das Kraftrad hat eine Karosserie 12, einen Tank 14 sowie eine verstellbare Sitzbaugruppe 16, die in Bezug auf eine Längsrichtung des Kraftrads 10 hinter dem Tank 14 am Kraftrad 10 angebracht ist.

Alternativ dazu kann der Tank 14 jedoch auch an einer anderen Stelle des Kraftrads 10 vorgesehen sein, beispielsweise im Bereich des Hecks des Kraftrads 10 oder unterhalb der Sitzbaugruppe 16.

In Figur 2 ist Sitzbaugruppe 16 in einer Seitenansicht gezeigt. Die Sitzbaugruppe 16 weist eine Sitzwanne 18 auf, an der ein Sitzpolster 20 angebracht ist, das mit einem Sitzpolsterbezug 22 bezogen ist. Das Sitzpolster 20 bildet dabei eine Sitzfläche für einen Fahrer des Kraftrads 10 und gegebenenfalls für einen Beifahrer.

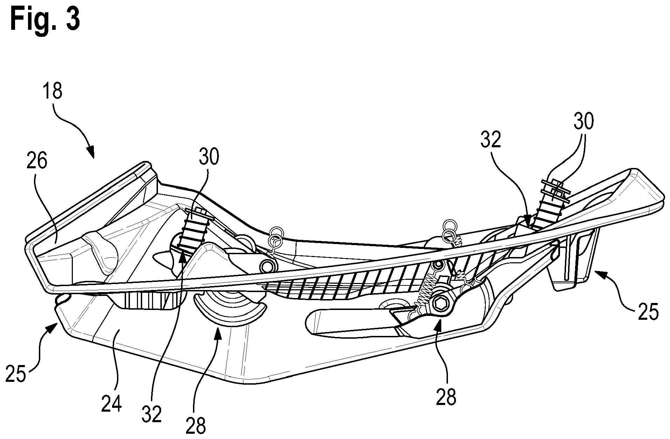

Figur 3 zeigt die Sitzbaugruppe 16 in einer Seitenansicht mit abgenommenem Sitzpolster 20. Die Sitzwanne 18 weist eine Basisschale 24 auf, die über einen Befestigungsabschnitt 25 fest und unverschiebbar an der Karosserie 12 und/oder an einem Rahmenteil des Kraftrads 10 angebracht ist. Ferner weist die Sitzwanne 18 eine Verstellschale 26 auf, die auf die Basisschale 24 aufgesetzt ist.

Die Sitzbaugruppe 16 hat eine Verstelleinrichtung 28, die die Basisschale 24 und die Verstellschale 26 verbindet und die dazu ausgebildet ist, eine Höhe und/oder eine Neigung der Verstellschale 26 gegenüber der Basisschale 24 zu verstellen.

Die Basisschale 24 weist drei Führungselemente 30 auf, die sich jeweils durch eine von zwei in der Verstellschale 26 vorgesehenen Durchgangsöffnungen 32 erstrecken. Es kann jedoch auch eine beliebige andere Anzahl an Führungselementen 30 vorgesehen sein. Vorzugsweise liegen dabei die Führungselemente 30 an ihren - in Längsrichtung der Sitzbaugruppe 16 gesehen - seitlichen Abschnitten jeweils an einer Innenwand der entsprechenden Durchgangsöffnung 32 an. Die beiden Führungselemente 30 verhindern dabei eine - in Längsrichtung des Kraftrads 10 gesehen - seitliche Bewegung der Verstellschale 26 gegenüber der Basisschale 24.

Weiter bevorzugt verlaufen die Führungselemente 30 von der Basisschale 24 ausgehend jeweils überwiegend vertikal, insbesondere wobei die Führungselemente 30 jeweils in Längsrichtung der Sitzbaugruppe 16 nach hinten geneigt sind und mit der Vertikalen einen Winkel von höchstens 45° einschließen, vorzugsweise höchstens 30°, weiter bevorzugt höchstens 20°.

Alternativ können die Führungselemente 30 auch als Scharniere und/oder als Drehachsen ausgebildet sein, die jeweils an der Basisschale 24 und der Verstellschale 26 angebracht sind, sodass die Basisschale 24 und die Verstellschale 26 relativ zueinander beweglich miteinander verbunden sind.

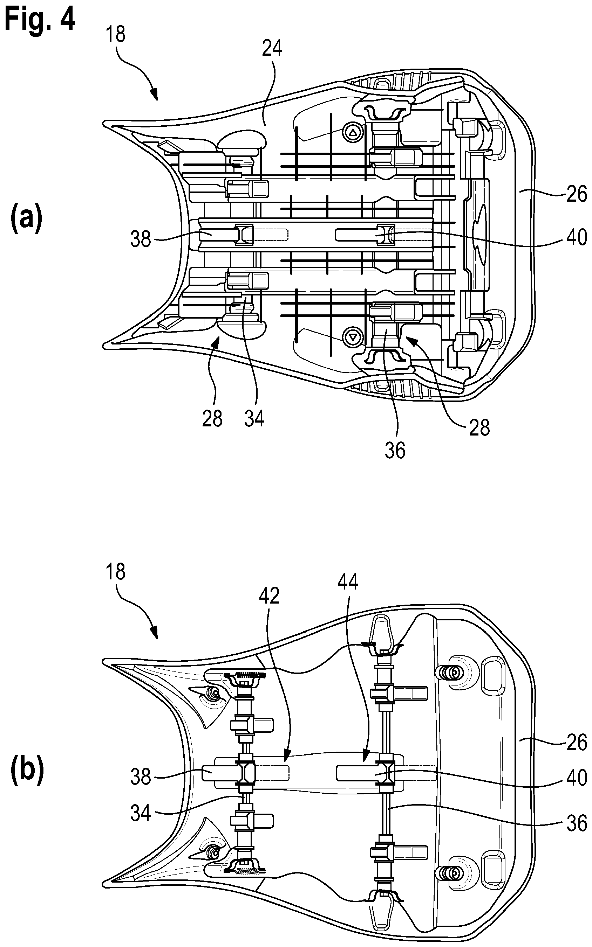

In Figur 4a ist die Basisschale 24 mit einer Verstelleinrichtung 28 gemäß einer ersten Ausführungsform in einer Draufsicht gezeigt, wobei aus Illustrationsgründen die Verstellschale 26 lediglich teilweise dargestellt ist. Die Verstellschale 26 erstreckt sich jedoch im Wesentlichen über die gesamte Basisschale 24.

Die Verstelleinrichtung 28 weist eine erste Welle 34 eine zweite Welle 36 auf, die zueinander in Längsrichtung der Sitzbaugruppe 16 versetzt und jeweils gegenüber der Basisschale 24 unverschiebbar, jedoch gegenüber der Basisschale 24 verdrehbar an der Basisschale 24 angebracht sind.

An der ersten Welle 34 ist ein erstes Verstellelement 38 drehfest angebracht. Analog dazu ist an der zweiten Welle 36 ein zweites Verstellelement 40 drehfest angebracht. Die beiden Verstellelemente 38, 40 sind in der gezeigten Ausführungsform jeweils als Kniehebel ausgebildet.

In Figur 4b ist die Verstellschale 26 in einer Ansicht von unten gezeigt, wobei aus Illustrationsgründen die Basisschale 24 nicht dargestellt ist, die beiden Wellen 34, 36 mit den beiden Verstellelementen 38, 40 jedoch schon.

Das erste Verstellelement 38 weist einen ersten Kontaktpunkt 42 zur Verstellschale 26 auf, während das zweite Verstellelement 40 einen zweiten Kontaktpunkt 44 zur Verstellschale 26 aufweist.

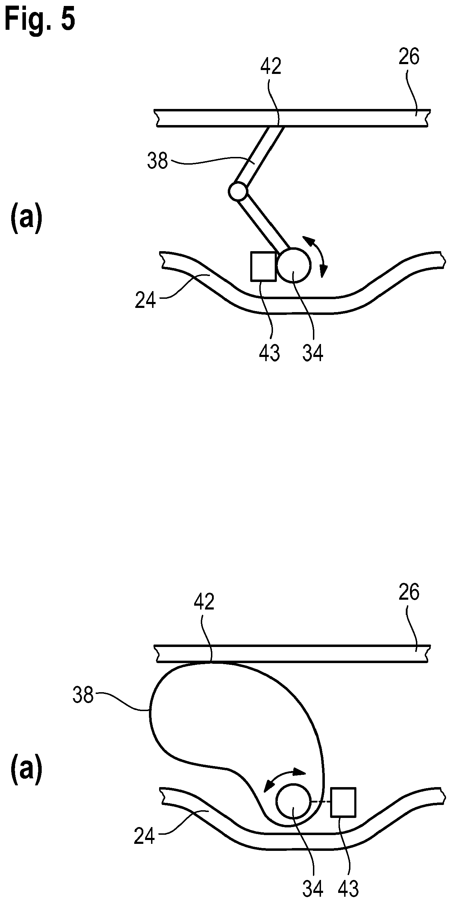

Wie in Figur 5a schematisch illustriert ist, legt das erste Verstellelement 38 dabei einen Abstand zwischen der ersten Welle 34 und dem ersten Kontaktpunkt 42 und damit einen lokalen Abstand zwischen der Basisschale 24 und der Verstellschale 26 fest. Wird die erste Welle 34 gedreht, so verändert sich dieser Abstand.

Analog dazu legt das zweite Verstellelement 40 einen Abstand zwischen der zweiten Welle 36 im zweiten Kontaktpunkt 44 und damit einen lokalen Abstand zwischen der Basisschale 24 und der Verstellschale 26 fest. Wird die zweite Welle 36 gedreht, so verändert sich dieser Abstand.

Da die beiden Wellen 34, 36 zueinander in Längsrichtung der Sitzbaugruppe 16 versetzt sind, kann durch Verdrehen der beiden Wellen 34, 36 die Höhe und/oder die Neigung der Verstellschale 26 gegenüber der Basisschale 24 eingestellt werden.

Vorzugsweise sind die beiden Wellen 34, 36 unabhängig voneinander verdrehbar, sodass sowohl die Höhe als auch die Neigung der Verstellschale 26 gegenüber der Basisschale 24 individuell einstellbar ist.

Insbesondere wird lediglich die Höhe der Verstellschale 26 verändert, wenn beide Verstellelemente 38, 40 gleichzeitig in die gleiche Richtung betätigt werden. Wird hingegen lediglich eines der beiden Verstellelemente 38, 40 betätigt oder werden beide Verstellelemente 38, 40 gleichzeitig in unterschiedliche Richtungen betätigt, so wird die Neigung der Verstellschale 26 verändert.

Insbesondere ist die Verstelleinrichtung 28 mechanisch und/oder elektrisch betätigbar. Dementsprechend umfasst die Verstelleinrichtung 28 wenigstens einen Elektromotor 43 und/oder einen mechanischen Mechanismus, mittels dem wenigstens eine, vorzugsweise beide Wellen 34, 36 verdreht werden können.

Vorzugsweise umfasst die die Verstelleinrichtung zwei Elektromotoren 43, die jeweils mit einer der Wellen 34, 36 drehmomentübertragend verbunden und dazu ausgebildet sind, die jeweils zugeordnete Welle 34, 36 zu verdrehen.

Die Elektromotoren 43 sind dabei betätigbar, ohne dass Teile wie zum Beispiel das Sitzpolster 20 von der Sitzbaugruppe 16 abgenommen werden müssen. Zu diesem Zweck kann die Verstelleinrichtung 28 ein von außerhalb des Kraftrads 10 zugängliches Betätigungselement aufweisen, wie zum Beispiel einen Betätigungsschalter für die Elektromotoren 43, der an einem Armaturenbrett und/oder an einem Lenker des Kraftrads 10 angeordnet sein kann.

Die Verstelleinrichtung 28 kann eine Feststelleinrichtung umfassen, die dazu ausgebildet ist, die Höhen- und/oder Neigungsverstellung der Verstellschale 26 freizugeben und/oder zu sperren. In der oben beschriebenen Ausführungsform kann die Feststelleinrichtung beispielsweise durch die Elektromotoren 43 selbst gebildet sein, die in einem Sperrmodus betrieben werden können, in dem sie das Verdrehen der beiden Wellen 34, 36 verhindern.

Optional kann das Kraftrad 10 ein Steuergerät 45 (Fig. 1) aufweisen, das dazu ausgebildet ist, die Verstelleinrichtung 28 automatisch basierend auf Betriebsparametern des Kraftrads 10 zu betätigen, insbesondere basierend auf einer Geschwindigkeit des Kraftrads 10.

Beispielsweise betätigt das Steuergerät die Verstelleinrichtung 28 derart, dass die Verstellschale 26 bei niedrigen Geschwindigkeiten, insbesondere beim Anfahren, eine geringere Neigung und/oder eine geringere Höhe aufweist als bei höheren Geschwindigkeiten.

Vorzugsweise wird bei niedrigen Geschwindigkeiten, insbesondere beim Anhalten des Kraftrads 10, die Höhe der Sitzfläche reduziert, sodass der Fahrer den Erdboden leichter mit seinen Beinen erreichen kann.

Weiter bevorzugt wird mit steigender Geschwindigkeit und/oder bei starker Beschleunigung, also wenn die Beschleunigung einen vordefinierten Grenzwert übersteigt, die Neigung der Sitzfläche erhöht, sodass der Fahrer weniger Kraft benötigt, um sich gegen den steigenden Windwiderstand am Kraftrad 10 festzuhalten.

Im Folgenden werden weitere Ausführungsformen der Sitzbaugruppe 16 beschrieben, wobei weitgehend funktionsgleiche Bauteile die gleichen Bezugszeichen tragen. Dabei werden im Folgenden lediglich die Unterschiede zur oben beschriebenen Ausführungsform erläutert.

In Figur 5b ist schematisch eine zweite Ausführungsform der Verstelleinrichtung 28 gezeigt, bei der das erste Verstellelement 38 als Nocken ausgebildet ist.

Die grundlegende Funktionsweise ist jedoch die gleiche wie oben beschrieben. Das erste Verstellelement 38 legt einen Abstand der ersten Welle 34 zum ersten Kontaktpunkt 42 fest, wobei sich aufgrund der unrunden Form des Nockens dieser Abstand bei einer Verdrehung der ersten Welle 34 ändert. Analog dazu kann auch das zweite Verstellelement 40 als Nocken ausgebildet sein.

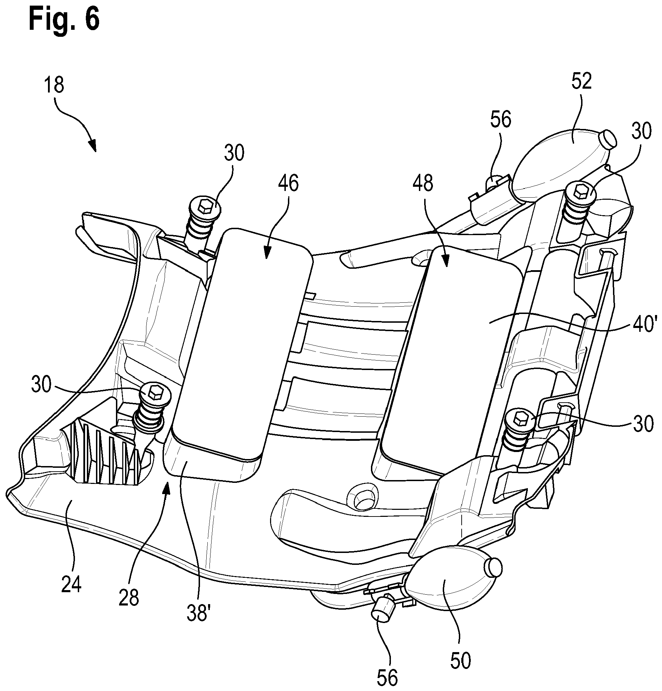

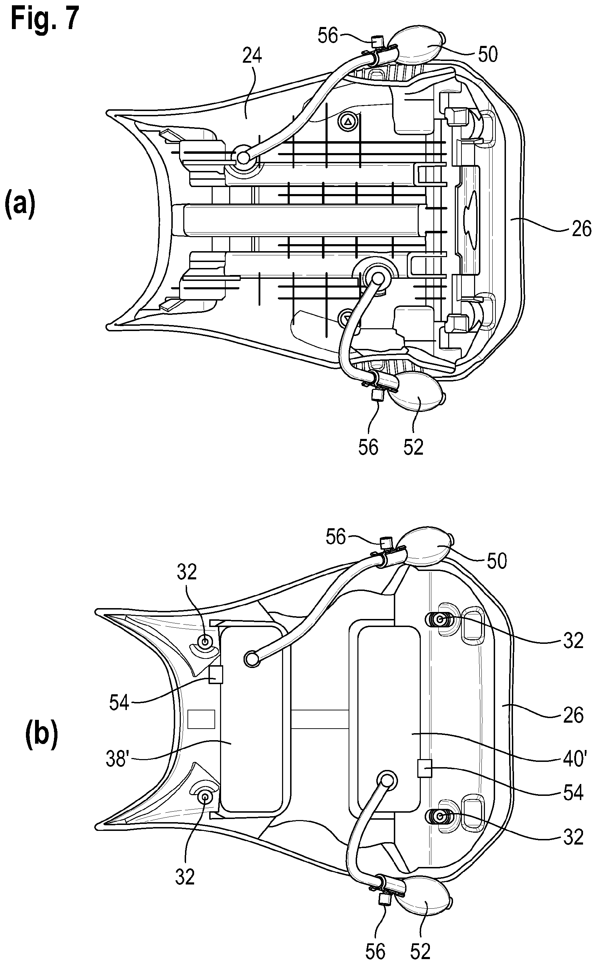

In den Figuren 6 und 7 ist eine dritte Ausführungsform der Sitzbaugruppe 16 in einer Schrägansicht gezeigt, bei der die beiden Wellen 34, 36 und die beiden Verstellelemente 38, 40 gemäß der oben beschriebenen Ausführungsformen durch ein erstes Verstellelement 38` und ein zweites Verstellelement 40` ersetzt sind, wobei die beiden Verstellelemente 38', 40` jeweils als pneumatisch und/oder hydraulisch betätigbares Fluidkissen ausgebildet sind.

Die beiden Verstellelemente 38`, 40' sind zueinander in Längsrichtung der Sitzbaugruppe 16 versetzt an der Basisschale 24 fest und unverschiebbar angebracht.

Die beiden Verstellelemente 38`, 40' sind hier im Wesentlichen rechteckig ausgebildet und erstrecken sich jeweils quer zur Längsrichtung der Sitzbaugruppe 16.

An ihrer Oberseite weisen das erste Verstellelement 38` und das zweite Verstellelement 40' eine erste Kontaktfläche 46 bzw. eine zweite Kontaktfläche 48 zur Verstellschale 26 auf.

Die Verstelleinrichtung 28 umfasst zusätzlich eine erste Pumpe 50 und eine zweite Pumpe 52, die mit dem ersten Verstellelement 38' bzw. dem zweiten Verstellelement 40' fluidleitend verbunden sind. Die beiden Pumpen 50, 52 sind dazu ausgebildet, ein Fluid in das jeweilige Verstellelement 38` bzw. 40' zu pumpen und/oder das Fluid aus dem jeweiligen Verstellelement 38' bzw. 40' abzupumpen.

Die Verstellelemente 38`, 40' erstrecken sich ausgehend von der Basisschale 24 jeweils über eine bestimmte Höhe, je nachdem, wie viel Luft und/oder Flüssigkeit sich in den Fluidkissen befindet. Die Höhe und/oder die Neigung der Verstellschale 26 gegenüber der Basisschale 24 kann dementsprechend dadurch verstellt werden, dass Luft und/oder Flüssigkeit in die Verstellelemente 38`, 40' gepumpt oder aus den Verstellelementen 38`, 40' abgelassen wird. Dabei ist die Höhe und/oder die Neigung der Verstellschale 26 gegenüber der Basisschale 24 umso größer, je mehr Luft und/oder Flüssigkeit sich in den Fluidkissen befindet.

Handelt es sich bei dem Fluid um Luft, so ist auch ein Einwegbetrieb der Pumpen 50, 52 denkbar, sodass die Pumpen 50, 52 lediglich dazu ausgebildet sind, Luft in die Fluidkissen zu pumpen. Um die Luft wieder abzulassen, kann an den Verstellelementen 38', 40` jeweils ein Ablassventil 54 vorgesehen sein.

Zum Beispiel umfasst die Verstelleinrichtung 28 zwei Elektromotoren, die jeweils einer der Pumpen 50, 52 zugeordnet und dazu ausgebildet sind, die jeweils zugeordnete Pumpe 50, 52 zu betätigen.

Die Verstelleinrichtung 28 umfasst eine Feststelleinrichtung, die dazu ausgebildet ist, die Höhen- und/oder Neigungsverstellung der Verstellschale 26 freizugeben und/oder zu sperren. Beispielsweise ist die Feststelleinrichtung durch Steuerventile 56 gebildet, wobei der ersten Pumpe 50 und der zweiten Pumpe 52 jeweils ein Steuerventil 56 zugeordnet ist. Die Steuerventile 56 sind dazu ausgebildet, einen Fluidstrom in die beiden Verstellelemente 38', 40' und/oder aus den beiden Verstellelementen 38`, 40' freizugeben und/oder zu sperren.

In allen oben beschriebenen Ausführungsformen kann natürlich auch nur eines der beiden Verstellelemente 38, 40 bzw. 38`, 40' vorgesehen sein. Je nach Anordnung dieses einen Verstellelements ist dann die Höhe und/oder die Neigung der Verstellschale 26 gegenüber der Basisschale 24 verstellbar.

## Patentansprüche

1. Verstellbare Sitzbaugruppe (16) für ein Kraftrad (10), mit einer Sitzwanne (18), die eine Basisschale (24) und eine Verstellschale (26) aufweist, und einer Verstelleinrichtung (28), wobei die Basisschale (24) einen Befestigungsabschnitt (25) zur festen und unverstellbaren Befestigung der Basisschale (24) am Kraftrad (10) aufweist,
wobei die Verstellschale (26) auf die Basisschale (24) aufgesetzt ist und die Basisschale (24) und die Verstellschale (26) über die Verstelleinrichtung (28) miteinander verbunden sind,
und wobei die Verstelleinrichtung (28) dazu ausgebildet ist, eine Höhe und/oder eine Neigung der Verstellschale (26) gegenüber der Basisschale (24) zu verstellen,
wobei die Verstelleinrichtung (28) wenigstens ein Verstellelement (38, 40; 38`, 40`) umfasst, das zwischen der Basisschale (24) und der Verstellschale (26) angeordnet und dazu ausgebildet ist, die Höhe und/oder die Neigung der Verstellschale (26) gegenüber der Basisschale (24) zu verstellen,
**dadurch gekennzeichnet, dass**
wenigstens ein weiteres Verstellelement (38, 40; 38`, 40') vorgesehen ist, das zwischen der Basisschale (24) und der Verstellschale (26) angeordnet und dazu ausgebildet ist, die Höhe und/oder die Neigung der Verstellschale (26) gegenüber der Basisschale (24) zu verstellen, wobei die beiden Verstellelemente (38, 40; 38`, 40') zueinander in einer Längsrichtung der Sitzbaugruppe (16) versetzt angeordnet sind, wobei die beiden Verstellelemente (38, 40; 38`, 40') unabhängig voneinander betätigbar sind, sodass sowohl die Höhe als auch die Neigung der Verstellschale (26) gegenüber der Basisschale (24) individuell einstellbar sind.

2. Sitzbaugruppe (16) nach Anspruch 1, **dadurch gekennzeichnet, dass** das wenigstens eine Verstellelement (38, 40) als Kniehebel, der zwischen der Basisschale (24) und der Verstellschale (26) angeordnet und mit diesen kraftübertragend verbunden ist, oder als Nocken ausgebildet ist, insbesondere wobei das wenigstens eine Verstellelement (38, 40) auf einer Welle (34, 36) angeordnet ist, die mit der Basisschale (24) verbunden ist.

3. Sitzbaugruppe (16) nach einem der vorhergehenden Ansprüche, **dadurch gekennzeichnet, dass** das wenigstens eine Verstellelement (38', 40') als pneumatisch und/oder hydraulisch betätigbares Fluidkissen ausgebildet ist.

4. Sitzbaugruppe (16) nach Anspruch 3, **dadurch gekennzeichnet, dass** die Verstelleinrichtung (28) eine Pumpe (50, 52) umfasst, die mit dem Fluidkissen fluidleitend verbunden und dazu ausgebildet ist, ein Fluid in das Fluidkissen zu pumpen und/oder das Fluid aus dem Fluidkissen abzupumpen.

5. Sitzbaugruppe (16) nach einem der vorhergehenden Ansprüche, **dadurch gekennzeichnet, dass** die Verstelleinrichtung (28) mechanisch und/oder elektrisch betätigbar ist.

6. Sitzbaugruppe (16) nach einem der vorhergehenden Ansprüche, **dadurch gekennzeichnet, dass** die Basisschale (24) wenigstens ein Führungselement (30) aufweist, auf das die Verstellschale (26) aufgesetzt ist, insbesondere wobei das Führungselement (30) in eine Öffnung (32) in der Verstellschale (26) eingreift.

7. Kraftrad (10) mit einer Sitzbaugruppe (16) nach einem der vorhergehenden Ansprüche, wobei die Basisschale (24) fest und unverstellbar am Kraftrad (10) angebracht ist.

8. Kraftrad (10) nach Anspruch 7, **dadurch gekennzeichnet, dass** das Kraftrad (10) ein Steuergerät (45) umfasst, das dazu ausgebildet ist, die Verstelleinrichtung (28) automatisch basierend auf Betriebsparametern des Kraftrads (10) zu betätigen, insbesondere basierend auf einer Geschwindigkeit des Kraftrads (10).

## Claims

1. Adjustable seat assembly (16) for a motorcycle (10), with a seat pan (18) which has a base shell (24) and an adjusting shell (26), and with an adjusting device (28), the base shell (24) having a fastening portion (25) for fixed and non-adjustable fastening of the base shell (24) to the motorcycle (10),
the adjusting shell (26) being placed onto the base shell (24), and the base shell (24) and the adjusting shell (26) being connected to one another via the adjusting device (28),
and the adjusting device (28) being configured to adjust a height and/or an inclination of the adjusting shell (26) with respect to the base shell (24),
the adjusting device (28) comprising at least one adjusting element (38, 40; 38', 40') which is arranged between the base shell (24) and the adjusting shell (26) and is configured to adjust the height and/or the inclination of the adjusting shell (26) with respect to the base shell (24),
**characterized in that**
at least one further adjusting element (38, 40; 38', 40') is provided which is arranged between the base shell (24) and the adjusting shell (26) and is configured to adjust the height and/or the inclination of the adjusting shell (26) with respect to the base shell (24), the two adjusting elements (38, 40; 38', 40') being arranged offset with respect to one another in a longitudinal direction of the seat assembly (16), the two adjusting elements (38, 40; 38', 40') being actuable independently of one another, with the result that both the height and the inclination of the adjusting shell (26) with respect to the base shell (24) can be set individually.

2. Seat assembly (16) according to Claim 1, **characterized in that** the at least one adjusting element (38, 40) is configured as a toggle lever, which is arranged between the base shell (24) and the adjusting shell (26) and is connected in a force-transmitting manner to them, or as a cam, the at least one adjusting element (38, 40) being arranged, in particular, on a shaft (34, 36) which is connected to the base shell (24).

3. Seat assembly (16) according to one of the preceding claims, **characterized in that** the at least one adjusting element (38', 40') is configured as a pneumatically and/or hydraulically actuable fluid cushion.

4. Seat assembly (16) according to Claim 3, **characterized in that** the adjusting device (28) comprises a pump (50, 52) which is connected in a fluid-conducting manner to the fluid cushion and is configured to pump a fluid into the fluid cushion and/or to pump the fluid out of the fluid cushion.

5. Seat assembly (16) according to one of the preceding claims, **characterized in that** the adjusting device (28) is mechanically and/or electrically actuable.

6. Seat assembly (16) according to one of the preceding claims, **characterized in that** the base shell (24) has at least one guide element (30), onto which the adjusting shell (26) is placed, the guide element (30) engaging, in particular, into an opening (32) in the adjusting shell (26).

7. Motorcycle (10) with a seat assembly (16) according to one of the preceding claims, the base shell (24) being attached fixedly and non-adjustably to the motorcycle (10) .

8. Motorcycle (10) according to Claim 7, **characterized in that** the motorcycle (10) comprises a control unit (45) which is configured to actuate the adjusting device (28) automatically based on operating parameters of the motorcycle (10), in particular based on a speed of the motorcycle (10).

## Revendications

1. Ensemble de siège réglable (16) pour une motocyclette (10), avec un bac de siège (18) qui présente une coque de base (24) et une coque de réglage (26), et un dispositif de réglage (28), la coque de base (24) présentant une section de fixation (25) pour la fixation fixe et non réglable de la coque de base (24) à la motocyclette (10),
la coque de réglage (26) étant placée sur la coque de base (24) et la coque de base (24) et la coque de réglage (26) étant reliées entre elles par le biais du dispositif de réglage (28),
et le dispositif de réglage (28) étant configuré pour régler une hauteur et/ou une inclinaison de la coque de réglage (26) par rapport à la coque de base (24),
le dispositif de réglage (28) comprenant au moins un élément de réglage (38, 40 ; 38', 40') qui est agencé entre la coque de base (24) et la coque de réglage (26) et qui est configuré pour régler la hauteur et/ou l'inclinaison de la coque de réglage (26) par rapport à la coque de base (24),
**caractérisé en ce que**
au moins un autre élément de réglage (38, 40 ; 38', 40') est prévu, qui est agencé entre la coque de base (24) et la coque de réglage (26) et qui est configuré pour régler la hauteur et/ou l'inclinaison de la coque de réglage (26) par rapport à la coque de base (24), les deux éléments de réglage (38, 40 ; 38', 40') étant agencés en décalage l'un par rapport à l'autre dans une direction longitudinale de l'ensemble de siège (16), les deux éléments de réglage (38, 40 ; 38', 40') pouvant être actionnés indépendamment l'un de l'autre, de telle sorte qu'aussi bien la hauteur que l'inclinaison de la coque de réglage (26) par rapport à la coque de base (24) sont ajustables individuellement.

2. Ensemble de siège (16) selon la revendication 1, **caractérisé en ce que** l'au moins un élément de réglage (38, 40) est configuré sous forme de genouillère, qui est agencée entre la coque de base (24) et la coque de réglage (26) et est reliée à celles-ci par transmission de force, ou sous forme de came, l'au moins un élément de réglage (38, 40) étant notamment agencé sur un arbre (34, 36) qui est relié à la coque de base (24).

3. Ensemble de siège (16) selon l'une quelconque des revendications précédentes, **caractérisé en ce que** l'au moins un élément de réglage (38', 40') est configuré sous forme de coussin de fluide actionnable pneumatiquement et/ou hydrauliquement.

4. Ensemble de siège (16) selon la revendication 3, **caractérisé en ce que** le dispositif de réglage (28) comprend une pompe (50, 52) qui est reliée fluidiquement au coussin de fluide et qui est configurée pour pomper un fluide dans le coussin de fluide et/ou pour pomper le fluide hors du coussin de fluide.

5. Ensemble de siège (16) selon l'une quelconque des revendications précédentes, **caractérisé en ce que** le dispositif de réglage (28) peut être actionné mécaniquement et/ou électriquement.

6. Ensemble de siège (16) selon l'une quelconque des revendications précédentes, **caractérisé en ce que** la coque de base (24) présente au moins un élément de guidage (30) sur lequel la coque de réglage (26) est placée, l'élément de guidage (30) s'engageant notamment dans une ouverture (32) dans la coque de réglage (26).

7. Motocyclette (10) avec un ensemble de siège (16) selon l'une quelconque des revendications précédentes, la coque de base (24) étant montée de manière fixe et non réglable sur la motocyclette (10).

8. Motocyclette (10) selon la revendication 7, **caractérisée en ce que** la motocyclette (10) comprend un appareil de commande (45) qui est configuré pour actionner automatiquement le dispositif de réglage (28) sur la base de paramètres de fonctionnement de la motocyclette (10), notamment sur la base d'une vitesse de la motocyclette (10).
